(19) Europäisches Patentamt
European Patent Office
Office européen des brevets

(11) **EP 4 203 453 A1**

(12) **EUROPEAN PATENT APPLICATION**

(43) Date of publication:
**28.06.2023 Bulletin 2023/26**

(21) Application number: **21217451.0**

(22) Date of filing: **23.12.2021**

(51) International Patent Classification (IPC):
***H04N 5/232*** *(2006.01)*      ***H04N 5/225*** *(2006.01)*

(52) Cooperative Patent Classification (CPC):
**H04N 23/50; H04N 23/555; H04N 23/683; H04N 23/689; H04N 23/80**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
- **JOHNSON, Mark Thomas**
  **Eindhoven (NL)**
- **VAN DEN DUNGEN, Wilhelmus Andreas Marinus Arnoldus**
  **Maria**
  **Eindhoven (NL)**

(74) Representative: **Philips Intellectual Property & Standards**
**High Tech Campus 52**
**5656 AG Eindhoven (NL)**

(54) **PERSONAL CARE DEVICES**

(57) Proposed are schemes, solutions, concepts, designs, methods and systems pertaining to aiding and/or improving image acquisition from a vibratory personal care device having a camera. Embodiments propose mapping at least one region of the captured image to a position of the vibratory portion. Using the position of the vibratory portion the pixel shift for the at least one region can be calculated and pixel data then shifted to construct an image of improved quality. Thus, by compensating for the vibratory motion improved images (e.g. images exhibiting less distortion) may be constructed/generated.

FIG. 1

EP 4 203 453 A1

**Description**

FIELD OF THE INVENTION

The present invention relates to the field of personal care devices, and in particular to the field of personal care devices that capture digital impressions of one or more features of a user.

BACKGROUND OF THE INVENTION

It is known to provide personal care devices with the ability or functionality to capture digital impressions (e.g. images) of a feature or part of a user during use. For example, Intra-Oral Scanner (IOS) devices use projected light (e.g. laser or structured light) and an image sensor to capture images of the dentogingival tissues. These images can be processed to create a three-dimensional (3D) model of the scanned surface. Data provided by IOS can therefore be useful for oral care, including the detection of common dental pathologies such as caries, tooth discoloration, misalignment. Also, it may be advantageous to capture and compare repeated IOS images, to enable identification of changes in dentogingival tissues over time for example.

Because personal care devices, such as electric brushing devices, are used in the oral cavity on a regular (e.g. daily basis), they may provide a suitable vehicle to regularly capture the images of a part of a user. Accordingly, there is trend to integrate cameras or imaging sensors into personal care devices, such as toothbrushes for example. However, because a main usage characteristic of such a personal care device may be its vibration or cyclical/periodic movement, images acquired by a camera integrated with a personal care device are typically distorted and/or blurred by the movement/vibration of the device.

Although image stabilization techniques are known for portable handheld devices (e.g. smart phone, digital photo cameras, etc.), such techniques are only designed and optimized for low frequency (e.g. <10 Hz), erratic (e.g. non-periodic, random, etc.) user-induced motions. Because a personal care device (such as an electric toothbrush) typically moves or vibrates at a much higher periodic frequency (e.g. >20-300 Hz), there remains a need to stabilize the image capture process and/or make the image acquisition process robust to device movements/vibrations generated by a personal care device.

SUMMARY OF THE INVENTION

The invention is defined by the claims.

According to examples in accordance with an aspect of the invention, there is provided a method of processing captured images from an personal care device, wherein the personal care device comprises: a vibratory portion; and a camera adapted, in use, to capture images of one or more features of a user and having an optical path that passes through the vibratory portion, and wherein the method comprises:

> mapping at least one region of the captured image to a position of the vibratory portion;
> calculating the pixel shift for the at least one region based on the position of the vibratory portion;
> shifting pixel data of the captured image based on the calculated pixel shift for the at least one region to generate a corrected image.

Proposed concepts thus aim to provide schemes, solutions, concepts, designs, methods and systems pertaining to aiding and/or improving image acquisition from a vibratory personal care device having a camera the image of which is influenced by the device vibration. This may either be a camera fixed rigidly to the vibrating device which may then vibrate with the device. Alternatively the camera sensor itself may be situated in a stationary part of a device (e.g. a brush handle) whilst the optical system of the device (like an optical fiber, the imaging lens of the optical system) are subject to the device vibrations. In particular, embodiments of the invention propose determining the position of the vibratory portion at the time the image, or the portion of the image, is captured. The pixel shift caused by the difference in position, or orientation, of the vibratory portion can then be calculated and the pixel data shifted/moved accordingly. Thus, through shifting/adjusting the pixel data based on the position of the vibratory portion, improved images (e.g. images exhibiting less wobble) may be constructed/generated. In this way, improved images may be obtained from a vibratory personal care device.

The position of the vibratory portion may include both its location and also its orientation so that when the position is known both the location and orientation is known.

In particular, it is proposed that, to reduce or minimize the wobble caused by the capture of data at different points in the vibration cycle, image data may be adapted based on the point in the vibration cycle at which the data is captured. For instance, image data may be shifted based on the point in the vibration cycle, thus ensuring that image data is shifted and repositioned to generate a reconstructed image with fewer wobbles due to the vibratory motion.

It has been realized that the position (including the orientation) of the vibratory portion may be identified and therefore the direction of the optical path of the camera is also known. Thus, the position from which image data is captured may be determined, and this can be used to ensure that the image data is assigned to the correct area of an image therefore reducing the effect of data being captured at different times in the vibratory cycle. This can then be used to construct a high quality image (in terms of reduced distortion), thus facilitating improved oral/dental care decision making. Thus, by compensating for the vibratory motion improved images (e.g. images exhibiting less distortion) may be constructed/generated.

In other words, embodiments propose to adjust the pixel data position for a region based on the position of the vibratory portion when data for that region is captured.

By adjusting the pixel data position to reduce/eliminate the effect of the different position of the vibratory portion, images of improved quality may be generated. Embodiments may therefore facilitate stable and high-quality image acquisition during tooth brushing. Such embodiments may be particularly relevant to teledentistry propositions, for example, by enabling improved imaging of a user's tooth, gum, tongue, etc. For instance, images obtained by proposed embodiments may aid dental care treatments and/or decision-making. Accordingly, embodiments may be used in relation to dental treatment selection so as support a dental care professional when selecting treatment for a subject.

Further, embodiments may facilitate image-based diagnostics, superior location sensing, therapy planning (e.g. orthodontics, aligners) and/or dental treatment monitoring.

By being integrated into the normal brushing regimen of a user (instead of using separate devices such as smart phones, dental endo-scopes or handheld intraoral scanners), embodiments may support improved dental care. Improved image-based dental care may therefore be provided by proposed concepts.

Embodiments may therefore provide the advantage that decision making in selecting an oral care treatment can be improved through the use of images captured by a vibratory personal care device. For example, embodiments may enable a larger number of oral care treatment options to be available (e.g. through the provision of more and/or improved information about a subject's oral health).

In some embodiments the step of mapping comprises mapping each region of a plurality of different regions of the captured image to a respective position of the vibratory portion. Thus, each different region of the captured image may be mapped to a position of the vibratory portion and the pixel data for each region may then be shifted according to the position of the vibratory portion when the data is captured.

In some embodiments the step of calculating may comprise calculating the pixel shift for each region based on the position of the vibratory portion. The appropriate pixel shift of each region can therefore be calculated so that the pixel data for each region is shifted by the correct amounts. The pixel shift for different regions may be different although the pixel shift for some regions may be the same.

In some embodiments shifting comprises shifting the pixel data in each region by the calculated pixel shift for each region to generate a corrected image. Again, this ensures that the different regions can be compensated by different amounts.

By mapping each regions, calculating the pixel shift for each region and shifting each region the displacement caused by the motion (and different direction of) the personal care device can be compensated to generate a reconstructed image with less distortion and wobble.

In some embodiments, the pixel shift may be proportional to the distance, d, between the vibratory portion and an image plane of the camera. The position of the vibratory portion from a central axis may be given by $\theta_{vib}$, and the pixel shift may then be calculated based on both the distance d and the angle $\theta_{vib}$, and preferably by d.tan $\theta_{vib}$ as the pixel shift distance.

By way of further example, embodiments may define in the captured image a region of minimal pixel shift. Calculating the pixel shift for the at least one region may then be further based on the distance of the at least one region from the region of minimal pixel shift.

In an embodiment, the pixel shift for the at least one region may be further based the angle of rotation of the vibration, $\theta_{rot}$

That is, some personal care devices may rotate from a central axis and the position of the vibratory portion from a central axis may then be given by $\theta_{vib}$. In some embodiments the pixel shift may then be calculated using d.tan $\theta_{vib}$ or indeed other similar geometric constructions using both the distance d and the angle $\theta_{vib}$ to give the pixel shift distance where the distance between the vibratory portion and an image plane of the camera may be given by d. In this way, the pixel shift for a region of the image may be calculated.

In other personal care devices the vibratory portion vibrates rotationally around a z axis and the position of the vibratory portion from a central rotational position is given by $\theta_{rot}$. In this example, the rotational displacement is dependent upon the distance, r, from the rotational axis. The pixel shift distance in an x direction, $d_x$ is calculated using r.sin $\theta_{rot}$. sin $\theta_{rot}$ and the pixel shift distance in a y direction, $d_y$, is calculated using r.sin $\theta_{rot}$. cos $\theta_{rot}$ where d is the distance between the vibratory portion and an image plane of the camera. These give an accurate calculation of the necessary pixel shift to compensate for the rotational motion of the optical path of the camera.

By way of example, mapping each region of the captured image to a position of the vibratory portion may comprise determining the position of the vibratory portion at the time the image of respective region was captured.

In some embodiments calculating the pixel shift for each region may use the pixel density of the captured image (or the sensor of the camera) to calculate the pixel shift for each region. This can be used to determine the number of pixels by which the pixel data must be shifted to generate a corrected image. Here, reference to pixel may encompass a single sensing element of an image sensor or a sensing element (single sensor) of an image sensor array. That is, a pixel may be thought of as being a single element of a sensed image, wherein the sensed image is formed from a plurality of sensed elements (i.e. pixels).

Regions may be allocated according to the time at which a part of an image is captured. For example, a region is an area in which the image data is captured at a particular time, or within a particular time period.

According to yet another aspect of the invention there is provided a computer program comprising computer program code means which is adapted, when said computer program is run on a computer, to implement the method according to a proposed embodiment.

According to another aspect of the invention, there is provided a system for processing captured images from a personal care device, wherein the personal care device comprises a vibratory portion, a camera adapted, in use, to capture images of one or more features of a user, and having an optical path that passes through the vibratory portion. The system comprises: a processor arrangement configured to process a captured image from the camera with an image processing algorithm, the image processing algorithm:

> mapping at least one region of the captured image to a position of the vibratory portion;
> calculating the pixel shift for the at least one region based on the position of the vibratory portion;
> shifting pixel data of the captured image based on the calculated pixel shift for the at least one region to generate a corrected image.

Thus, pixel data can be shifted to compensate for the position of the vibratory portion so that a less distorted image is obtained.

Such a system may be provided as a standalone system for use with one or more personal care devices. Thus, a system according to an embodiment may be employed with a conventional vibratory personal care device to provided improved and/or extended functionality.

According to an embodiment there is provided a personal care device comprising:

> a vibratory portion;
> a camera adapted, in use, to capture images of one or more features of a user, and having an optical path that passes through the vibratory portion; and
> a system for processing captured images according as described above. Such a personal care device allows images with reduced distortion to be obtained thereby allowing the quality of oral care to be improved.

In some embodiments the camera is located on the vibratory portion. When the camera is located on the vibratory portion the optical path of the camera is changed similarly to the position, or orientation, of the vibratory portion. In other embodiments the camera may be located on another, non-vibratory portion of the personal care device but the optical path passes through the vibratory portion.

The personal care device may comprise a toothbrush, and may preferably comprise an electric toothbrush that is adapted to vibrate in use. In other embodiments, the personal care device may comprise a mouthpiece, shaver or a skin cleansing device that is adapted to vibrate in use. One or more proposed concept(s) may therefore be employed in a range of different personal care devices. Embodiments may therefore have wide application in the field of personal care devices (and image capture and/or processing concepts for images captured by vibratory personal care devices).

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

> Figure 1 is a simplified schematic block diagram of an electric toothbrush according to a proposed embodiment;
> Figure 2 is a simplified block diagram of a portion of an electric toothbrush depicting different modes of vibration;
> Figure 3 is a graph showing an exemplary variation in angle θ (of displacement) and angular velocity of the brush head of Figure 1 over time as the brush head vibrates, wherein the variation in displacement angle θ of the brush head is depicted by the solid line, and wherein the variation in angular velocity v of the brush head is depicted by the dashed line;
> Figure 4A is a depiction of the calculation of the displacement for a first mode of vibration;
> Figure 4B is a depiction of the calculation of the displacement for a second mode of vibration;
> Figure 5 is a simplified schematic block diagram of a mouthpiece according to a proposed embodiment;
> Figure 6A illustrates images without correction;
> Figure 6B illustrates results of a simulation of captured image frames using a square-wave driven vibrating camera at 30 frames per second for varying camera exposure times, vibration frequencies and vibration periods;
> Figure 7A illustrates extracting image data from captured images according to proposed embodiment;
> Figure 7B depicts the use of the extracted image data from Figure 5A to construct an improved (e.g. high quality) image according to an embodiment;
> Figure 8 is a flow diagram of a method of processing captured images from a personal care device according to a proposed embodiment; and

Figure 9 is a simplified block diagram of a computer within which one or more parts of an embodiment may be employed.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

The invention proposes concepts for aiding and/or improving image acquisition from a vibratory personal care device having a camera where the camera image vibrates together with the device. In particular, embodiments may provide a system, device and/or method which identifies image data captured during a vibratory period when the vibratory portion is not at a specific position. The vibratory portion could be measured relative to a central target position, or another position. Image data capture when the vibratory portion is not at the specific position is identified and the displacement from the specific, target position calculated. Pixel data can then be moved (e.g. shifted or translated) to compensate for the deviation from the target position. For example, the pixel data can then be moved so that it is at the specific target position. Through such control of the image data acquisition, improved images (e.g. images exhibiting reduced distortion or wobble) may be obtained.

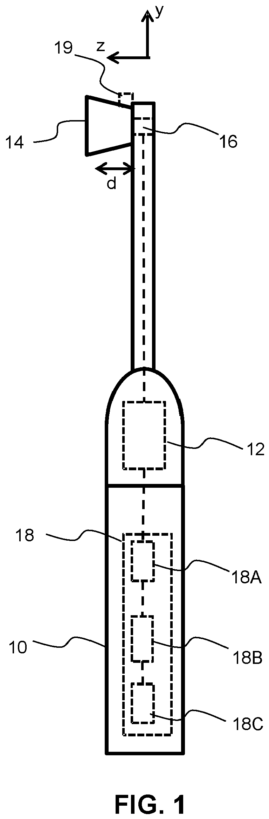

Referring to Figure 1, there is shown a simplified schematic block diagram of an electric toothbrush 10 according to a proposed embodiment. The electric toothbrush 10 comprises vibratory means 12 (specifically, a motor) that is adapted, in use, to vibrate a brush head 14 of the electric toothbrush 10 (with a frequency of about 200Hz).

The electric toothbrush 10 also comprises a camera 16 (e.g. digital camera) that is adapted, in use, to capture images of one or more oral features of a user. Furthermore, Figure 1 indicates the distance between the vibratory axis of the vibratory portion and an image plane of the camera, d.

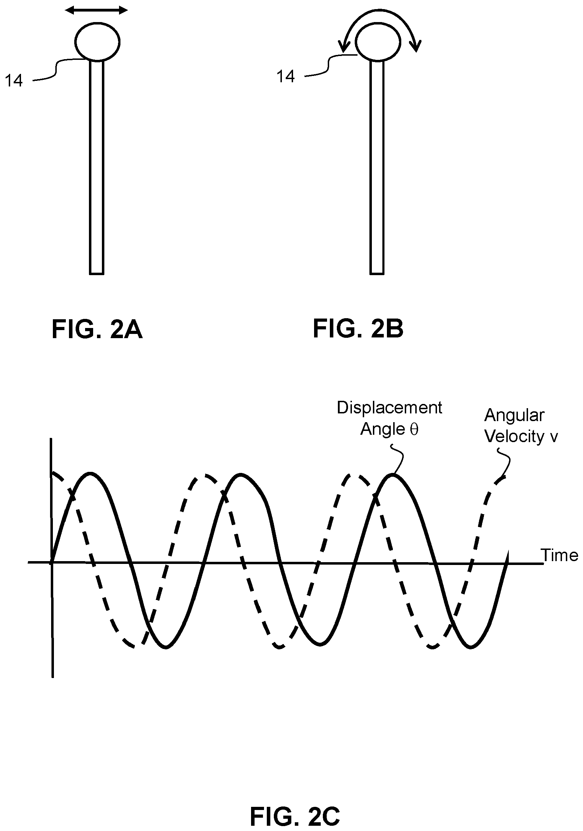

More specifically, the motor 12 is configured to cause the brush head 14 to repeatedly vibrate. The vibrations can either be rotating around a y axis (as depicted in figure 1), as shown in Figure 2A or rotational around a central z axis, as shown in figure 2B. The vibrations clockwise then anticlockwise by around 10°-25° from a rest position in a periodic manner. In this way, the brush head 14 vibrates with a periodic vibration waveform. As an example, the rotation may be at a frequency of 200Hz. As a further example, the maximum angular rotation may be 15°.

Purely by way of example, the brush head 14 may repeatedly rotate clockwise then anticlockwise by around 10°-25° from a rest position in a periodic manner. Other embodiments may, however, employ a brush head that vibrates in a different manner. For instance, alternative embodiments may comprise a brush head that shakes (left and right, or up and down) repeatedly, i.e. repeatedly displaces (laterally or vertically) in opposite directions from a rest position.

By way of further illustration, Figure 2C depicts a graph showing an exemplary variation in angle θ (of displacement) and angular velocity of the brush head 14 overtime as the brush head 14 vibrates. The variation in displacement angle θ of the brush head 14 is depicted by the solid line, whereas the variation in angular velocity v of the brush head 14 is depicted by the dashed line.

As can be seen from the variation in Figure 2C, there is a different angular displacement, θ, at different times. If the optical path of the of the camera is varied in the same way as the brush head then the position of the pixel data will also vary. The invention is based on the concept that the displacement due to the vibration of the camera can be calculated and compensated for.

Referring back to the embodiment of Figure 1, the electric toothbrush 10 comprises a system 18 for processing captured images. The system comprises a processor arrangement 18A that is configured to process a captured image from the camera with an image processing algorithm to map at least one region of the captured image to a position of the vibratory portion. This may be by determining the position of the vibratory portion at the time the image of respective region was captured. The system also comprises an image processor 18B that is to calculate the pixel shift for the at least one region based on the position of the vibratory portion. Finally, the system comprises an image processor 18C that is to shift the pixel data to generate a corrected image. Note that whilst here all three processors are configured on the toothbrush, in other embodiments one or more of the processors may be remote processors connected to the toothbrush by, for example, a wireless connection.

Specifically, the processor arrangement 18A obtains the time at which a region of the image is obtained and maps this to the position of the brush head 14 at the time the image of the region is captured. The vibratory motion of the brush head 14 is known and therefore can easily be mapped to the time at which the image of the region is captured.

Using the example of the vibratory motion depicted in Figure 2A the angle varies during the vibration according to the curve depicted in Figure 2C. However, if the time is known, the angle, $\theta_{vib}$, of the brush head from a central axis at the time the image of the region is captured is known.

Similarly, using the example of the vibratory motion depictured in Figure 2B the angle of rotation varies but at a given time of image capture the rotational angle, $\theta_{rot}$, can be determined.

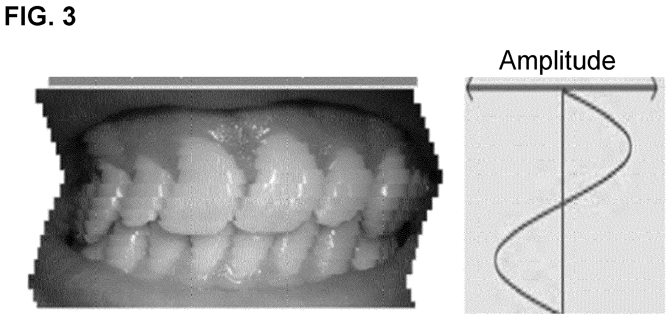

In the example depicted in Figure 3 different regions are formed by a group of rows of pixels. As can be seen, the different regions can easily be mapped to the vibratory pattern by comparing the deviation to the vibratory waveform.

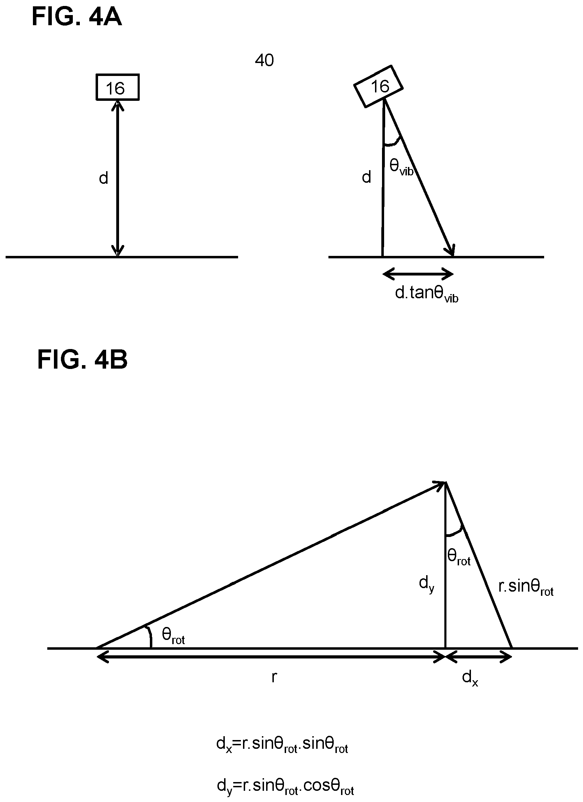

The image processor 18B is then adapted to calculate the pixel shift for the region based on the position of the brush head. An example of this for the vibratory motion of Figure 2A is depicted in Figure 4A. The angle, $\theta_{vib}$ at the time of image capture of the region is known and the distance between the brush head and the image plane, or object is d and, in this example, is assumed to be the length of the brush hair. Figure 4A depicts how the displacement can be calculated. The displacement is therefore given by:

$$\text{Displacement} = d.\tan \theta_{vib}$$

Once the displacement is known the pixel density can then be used to determine how far in the image the pixel data for a region is shifted or moved.

For a specific example of an image frame with 620 columns and 480 rows of pixels capturing an area of 10mmx10mm. If the displacement (calculated above) due to the vibratory motion at the time of image capture is 2mm then the pixel data should be shifted by 20% of the image. If the vibration is in the row direction this will result in a shift of 124 pixels (20% of 620). If the vibration is in the column direction it will result in a shift of 96 pixels (20% of 480). If the vibration makes an angle $\beta$ with the column direction then the shift will be a vector with length 2mm comprising a 96.sin $\beta$ number of rows and 128.cos $\beta$ number of columns.

We have described the shift of the image as a function of the distance of the feature in the image form the region of the image with minimal pixel shift, r, and the angle of rotation of the vibration, $\theta_{rot}$. Here we describe an example of a further the step of converting the pixel shift from the rotational co-ordinate system to the cartesian system of the camera image. In this example, for the rotational motion depicted in Figure 2B a rotation of the brush head of angle $\theta_{rot}$ will result in a shift in the position of the feature in the captured frame by an angle equal to the rotation angle $\theta_{rot}$, resulting in a position shift which depends upon the distance of the pixel from the centre of the image r where the pixel shift is minimum. We consider here a portion of the image along the image horizontal at the position of the line of pixels in the image which are at the height of the centre of the image which is rotated above the horizontal by the rotation angle $\theta_{rot}$. As shown in Figure 4B the displacement in the x direction, $d_x$, and the displacement in the y direction, $d_y$, can be calculated according to the following equations:

$$d_x = r.\sin \theta_{rot}.\sin \theta_{rot}$$

$$d_y = r.\sin \theta_{rot}.\cos \theta_{rot}$$

Once the displacement is known, it can be converted to a number of pixels in the image in a similar manner as described above.

Although two different vibratory motions are described in conjunction with figures 2A, 2B and figures 4A and 4B, other vibratory motions could also be used and the displacement calculated using known techniques. For example, although figures 2A and 4A relate to rotation around a y axis, there could equally be rotation around an x axis. Furthermore, there may be a combination of vibratory motions. For example there could be a combination of the vibratory motions of Figures 2A and 2B.

The image processor 18C then shifts, or moves, the pixel data to generate a corrected image. In an embodiment pixel data is shifted by the distance calculated by processor 18B.

The present invention uses the known geometry and vibrational motion of the camera to correct for different directions of the camera during image capture.

In some embodiments, a plurality of regions of an image are processed by processors 18A, 18B and 18C so, for each of the plurality of regions the position of the vibratory portion is mapped, a pixel shift is calculated and the pixels are shifted by the distance calculated. In some embodiments, each region of an image is processed by processors 18A, 18B and 18C so, for each region the position of the vibratory portion is mapped, a pixel shift is calculated and the pixels are shifted by the distance calculated.

To aid reduction in the exposure duration that is required to capture an adequately exposed image, the camera 16 of the embodiment of Figure 1 comprises an illumination device 19 (e.g. LED) that is configured, in use, to illuminate a part of the user's oral cavity. That is, where the sensitivity (e.g. ISO) and/or the lens aperture of the camera 16 may be fixed and/or limited, a reduction in the required length of exposure to capture an adequate amount of light may be obtained through illumination of the user's oral cavity by the illumination device 19.

Also, although the embodiment of Figure 1 employs a concept of shifting the pixel data of the region by the amount calculated by the processor 18B to return to a central position other embodiments could use calculate a displacement to a different position. For example, a displacement to another fixed position, for example the anti-nodes of the vibration, could be calculated.

Additionally, the embodiment described above shifts the pixel data of the region for which the displacement is calculated. Alternatively pixel data from other regions could be shifted to compensate for the displacement.

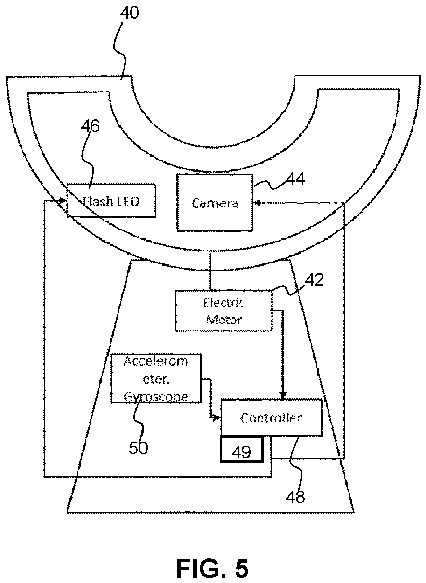

Referring to Figure 5, there is shown a simplified schematic block diagram of a mouthpiece 40 according to another embodiment. The mouthpiece 40 is adapted to be inserted into a user's mouth and vibrate (in use) for oral cleaning purposes.

The mouthpiece 40 comprises vibratory means 42 (specifically, an electric motor) that is adapted, in use, to cause the mouthpiece to vibrate with periodic vibration waveform (having a frequency in the range of 100Hz-500Hz).

The mouthpiece 40 also comprises a camera 44 positioned in the tray of the mouthpiece and adapted, in use, to capture images of one or more oral features of the user. A flash LED 46 is also provided in the tray of the mouthpiece for illuminating the oral cavity of the user, in use. The camera 44 and LED 46 are configured to be controlled by a control unit (i.e. controller) 48 of the mouthpiece.

Incorporated with the control unit 48 is a system 49 for processing captured images from the camera 44. The system 49 is configured to map at least one region of the captured image to a position of the camera. For assisting the system 50, the mouthpiece 40 also comprises a sensor arrangement 50 that is adapted to sense an operating parameter of the mouthpiece 40. Specifically, in this example, the sensor arrangement 50 comprises an accelerometer and gyroscope for detecting variations in displacement and velocity of the mouthpiece 40. Information about the detected variations in displacement and velocity of the mouthpiece 40 is provided to the system 50 and, further based on this information, the system 49 maps a region of the captured image to the position of the camera, or optical path of the camera.

As already explained above with reference to the embodiment of Figure 1, the system 49 also calculates the pixel shift for the at least one region based on the position of the vibratory portion and shifts pixel data to generate a corrected image. Advantageously, this process may be repeated for a plurality, or all of the regions of the image.

It is noted that the camera in the embodiments described above comprises a rolling shutter camera configured to operate at an image capture frame rate. With respect to such a rolling shutter camera, trade-offs in operating characteristics may be required. For example, rolling shutter cameras may be more cost effective (e.g. cheaper) but may take longer for a full image capture depending on the acquisition settings and/or capabilities.

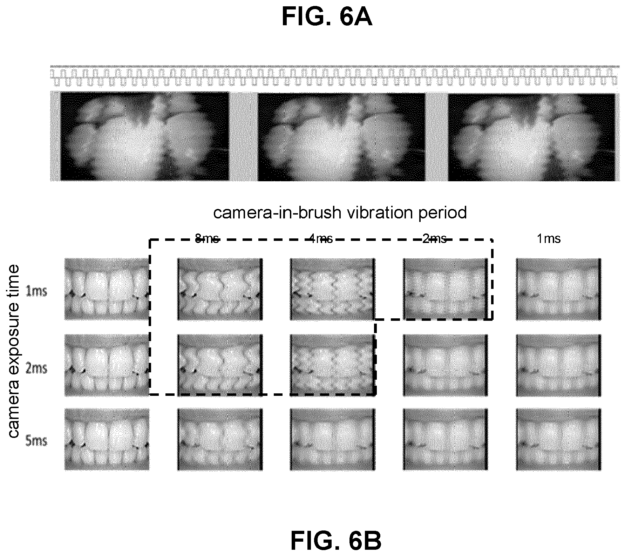

For a rolling shutter camera, the shutter and capture are typically per line, and thus different lines will have different displacements due to the vibratory motion. Each line, or region, may be displaced by a different amount resulting in a distorted image with a "wobble" effect. Examples of such images are shown in Figure 6A. Referring to figure 6B, results of a simulation of captured image frames using a vibrating camera at 30 frames per second are illustrated for varying camera exposure times, vibration frequencies and vibration periods. Embodiments may therefore employ a line scanner and place the captured line in an image per location.

Thus, it will be appreciated that the rolling shutter camera can be free running and out of synchronization with vibration of the personal care device (and thus the image data capture frequency). A full image may then be reconstructed from image data acquired from multiple difference frames of the rolling shutter camera.

Also, a similar principle may be employed a high-speed global shutter camera where rather than lines being shifted, individual images are shifted and can be corrected as a whole for the motion. For instance, where a first image is taken left and a second image taken right, the pixel shift between both can be calculated and thus these two images can be corrected for location and added to increase S/N ratio (or wide angle image created by using the correct parts of each image), as can be done per line in the rolling shutter camera implementation.

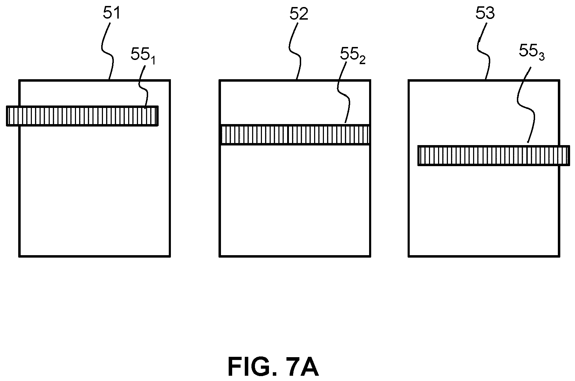

For example, Figure 7A provides an illustration of reducing distortion according to proposed embodiment. The illustration shows first 51, second 52 and third 53 sequentially-captured images from a rolling shutter camera 16 (i.e. first to third sequential frames from the rolling shutter camera).

As depicted in Figure 7A, for the first captured image 51, a first region $55_1$ of the image 51 is captured when brush head is displaced from a central axis. Also, a second region $55_2$ of a second image 51 is captured at a second time and at this time the brush head is at its central axis. Lastly, a third region $55_3$ of the third captured image 53 is captured at a third time when the brush head is at a third position.

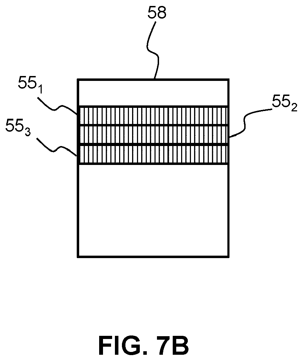

The brush head position is determined for each of the first, second and third times by processor 18A and displacement for each of the regions $55_1$, $55_2$ and $55_3$ is calculated by processor 18B. As depicted in Figure 7B pixel data from each of the regions can be shifted to a central position and an improved image constructed with reduced distortion.

The inventors have realized that the cause of the wobble is related to the precise angle of the camera (or, specifically, the focusing lens of the camera) to the tooth which can cause wobbly images. Examples of scenarios in which wobbly images may result in:

a) a rolling shutter camera running freely during constant, or non-pulsed, illumination;

b) using pulsed illumination the phase of the light pulse in the vibration changes from image to image. In the case of a rolling shutter camera some lines in the image will be captured whilst the camera is pointed in one direction whilst others will be captured whilst the camera is pointed in another direction. During the vibrational motion wobbly images will be created as the camera rolls through the lines of the image frame;

c) for a short shutter time the phase of the shutter opening in the vibration changes from image to image. In the case of a rolling shutter camera some lines in the image will be captured whilst the camera is pointed in one direction whilst others will be captured whilst the camera is pointed in another direction. As the camera moves through the vibrational motion wobbly images will be created as the camera rolls through the lines of the image frame;

d) if multiple lines or areas are captured in one frame or image these lines will be "pixel" shifted depending on the moment / phase and repetitive speed of line capture;

e) In a rolling shutter camera if multiple images are captured during the vibration and the images are merged;

f) In a global shutter camera, in which the whole image is captured simultaneously the whole image will be shifted by the vibratory motion.

It will therefore be appreciated that the present invention can be applied to the situations, and scenarios described above. After correction of the displaced regions, an improved quality image can result.

It will therefore be appreciated that embodiments may be configured to determine the position of the vibratory portion and then correct the image data for the variation from a specific point. The image data may be corrected to a central point, or may be corrected to another specific point. By adjusting, or correcting, the image data to a single point in the vibratory cycle the distortion due to the vibration can be reduced or eliminated.

Removing the distortion enables improves images to be obtained and therefore improved oral care to be administered.

In the example of figure 1 the camera 16 is located on the brush head 14. However, it could equally be positioned elsewhere, for example, within the body of the electric toothbrush. The optical path however, may pass through the brush head 14 and therefore be subject to the same vibration and motion as the brush head. A resulting image would therefore also be subject to the same type of distortion. The present invention is applicable to personal care devices in which the focusing lens of the camera is arranged on the brush head, or vibratory portion. The present invention can therefore be applied to personal care devices in which the camera is located remotely from the brush head but the optical path of the camera passes through the brush head.

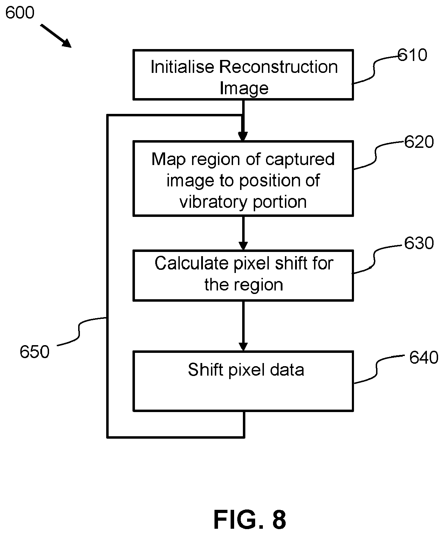

By way of example, referring now to Figure 8, there is depicted a flow diagram of a method 600 of processing captured images from a personal care device according to a proposed embodiment.

For this exemplary embodiment, the personal care device comprises: a vibratory portion and a camera adapted, in use, to capture images of one or more oral features of a user and having an optical path that passes through the vibratory portion. Each image comprises one or more regions.

The method 600 begins with the initialization 610 of a reconstruction image. For instance, the reconstruction image may be initialized with a first raw captured image from the camera.

Next, in step 620, a captured image from the camera image is processed with an image processing algorithm to map at least one region of the captured image to a position of the vibratory portion. Such a region may be as little as a single pixel for example. Specifically, the image processing algorithm compares the position of the vibratory portion at a time the image of the region was captured.

Then, the pixel shift for the region is calculated in step 630.

In step 640, pixel data is shifted. In an embodiment, pixel data from the region is shifted by the amount calculated in step 630. Thus, a corrected image is generated using the pixel shifted data. As indicated by the arrow labelled "650", the process of mapping a region can be repeated for each region in an image.

From the above description of various concepts and embodiments, it will be appreciated that there is proposed a method of processing captured images from an personal care device. Such a method may be employed in a processing system or computer, and such a system/computer may be integrated with a vibratory personal care device.

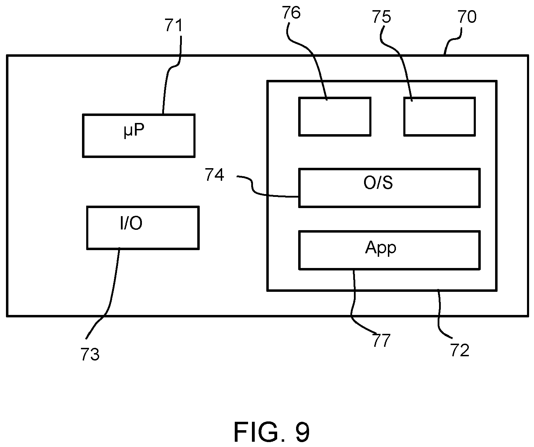

Figure 9 illustrates an example of a computer 70 within which one or more parts of an embodiment may be employed. Various operations discussed above may utilize the capabilities of the computer 70. For example, one or more parts of a system for providing a subject-specific user interface may be incorporated in any element, module, application, and/or component discussed herein. In this regard, it is to be understood that system functional blocks can run on a single computer or may be distributed over several computers and locations (e.g. connected via internet), such as a cloud-based computing infrastructure.

The computer 70 includes, but is not limited to, PCs, workstations, laptops, PDAs, palm devices, servers, storages, and the like. Generally, in terms of hardware architecture, the computer 70 may include one or more processors 71, memory 72, and one or more I/O devices 73 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 71 is a hardware device for executing software that can be stored in the memory 72. The processor 71 can be virtually any custom made or commercially available processor, a central processing unit (CPU), a digital signal processor (DSP), or an auxiliary processor among several processors associated with the computer 70, and the processor 71 may be a semiconductor based microprocessor (in the form of a microchip) or a microprocessor.

The memory 72 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 72 may incorporate electronic, magnetic, optical, and/or other types of storage media. Note that the memory 72 can have a distributed architecture, where various components are situated remote from one another, but can be accessed by the processor 71.

The software in the memory 72 may include one or more separate programs, each of which comprises an ordered listing of executable instructions for implementing logical functions. The software in the memory 72 includes a suitable operating system (O/S) 74, compiler 76, source code 75, and one or more applications 77 in accordance with exemplary embodiments. As illustrated, the application 77 comprises numerous functional components for implementing the features and operations of the exemplary embodiments. The application 77 of the computer 70 may represent various applications, computational units, logic, functional units, processes, operations, virtual entities, and/or modules in accordance with exemplary embodiments, but the application 77 is not meant to be a limitation.

The operating system 74 controls the execution of other computer programs, and provides scheduling, input-output control, file and data management, memory management, and communication control and related services. It is contemplated by the inventors that the application 77 for implementing exemplary embodiments may be applicable on all commercially available operating systems.

Application 77 may be a source program, executable program (object code), script, or any other entity comprising a set of instructions to be performed. When a source program, then the program is usually translated via a compiler (such as the compiler 76), assembler, interpreter, or the like, which may or may not be included within the memory 72, so as to operate properly in connection with the O/S 74. Furthermore, the application 77 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 73 may include input devices such as, for example but not limited to, a mouse, keyboard, scanner, microphone, camera, etc. Furthermore, the I/O devices 73 may also include output devices, for example but not limited to a printer, display, etc. Finally, the I/O devices 73 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 73 also include components for communicating over various networks, such as the Internet or intranet.

If the computer 70 is a PC, workstation, intelligent device or the like, the software in the memory 72 may further include a basic input output system (BIOS) (omitted for simplicity). The BIOS is a set of essential software routines that initialize and test hardware at startup, start the O/S 74, and support the transfer of data among the hardware devices. The BIOS is stored in some type of read-only-memory, such as ROM, PROM, EPROM, EEPROM or the like, so that the BIOS can be executed when the computer 70 is activated.

When the computer 70 is in operation, the processor 71 is configured to execute software stored within the memory 72, to communicate data to and from the memory 72, and to generally control operations of the computer 70 pursuant to the software. The application 77 and the O/S 74 are read, in whole or in part, by the processor 71, perhaps buffered within the processor 71, and then executed.

When the application 77 is implemented in software it should be noted that the application 77 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 77 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The proposed image capture and/or processing methods, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figs. 1 and 5 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method (600) of processing captured images from a personal care device (10), wherein the personal care device comprises: a vibratory portion (14); and a camera (16) adapted, in use, to capture images of one or more features of a user and having an optical path that passes through the vibratory portion, and wherein the method comprises:

   mapping (620) at least one region of the captured image to a position of the vibratory portion;
   calculating (630) the pixel shift for the at least one region based on the position of the vibratory portion;
   shifting (640) pixel data of the captured image based on the calculated pixel shift for the at least one region to generate a corrected image.

2. The method of claim 1 wherein the image comprises a plurality of different regions, and wherein mapping comprises mapping each of the plurality of regions of the captured image to a respective position of the vibratory portion.

3. The method of claim 2 wherein calculating (630) comprises calculating the pixel shift for each of the plurality of regions based on the position of the vibratory portion.

4. The method of any one of the preceding claims wherein shifting comprises, for each of the at least one region of the captured image, shifting the pixel data in the region of the captured image by the calculated pixel shift for the region to generate a corrected image.

5. The method of claim 1 where the pixel shift is proportional to the distance, d, between the vibratory portion and an image plane of the camera,

6. The method of claim 5, wherein the position of the vibratory portion from a central axis is given by $\theta_{vib}$, and wherein the pixel shift is calculated based on both the distance d and the angle $\theta_{vib}$, and preferably by d.tan $\theta_{vib}$ as the pixel shift distance.

7. The method of any preceding claim, further comprising defining in the captured image a region of minimal pixel shift.

8. The method of claim 7 wherein calculating (630) the pixel shift for the at least one region is further based on the distance of the at least one region from the region of minimal pixel shift.

9. The method of any preceding claim, wherein calculating (630) the pixel shift for the at least one region is further based on the angle of rotation of the vibration, $\theta_{rot}$

10. The method of any preceding claim, further comprising the step of converting the calculated pixel shift from the rotational co-ordinate system to the cartesian system of the camera image.

11. The method of any preceding claim, wherein mapping (620) a region of the captured image to a position of the vibratory portion comprises determining the position of the vibratory portion at the time the image of the respective region was captured.

12. The method according to any one of the preceding claims wherein calculating (630) the pixel shift for each region is based on the pixel density of the captured image.

13. A computer program comprising computer program code means which is adapted, when said computer program is run on a computer, to implement the method of any of claims 1 to 12.

14. A system for processing captured images from a personal care device, wherein the personal care device comprises a vibratory portion, a camera adapted, in use, to capture images of one or more features of a user, and having an optical path that passes through the vibratory portion, the system comprising:
a processor arrangement (71) configured to process a captured image from the camera with an image processing algorithm, the image processing algorithm comprising:

mapping (620) at least one region of the captured image to a position of the vibratory portion;
calculating (630) the pixel shift for the at least one region based on the position of the vibratory portion; and
shifting (640) pixel data of the captured image based on the calculated pixel shift for the at least one region to generate a corrected image.

15. A personal care device (10) comprising:

a vibratory portion (14);
a camera (16) adapted, in use, to capture images of one or more features of a user, and having an optical path that passes through the vibratory portion; and
a system (18) for processing captured images according to any of claims 11 to 14, and preferably wherein the personal care device comprises a toothbrush.

16. A personal care device (10) according to claim 15 wherein the camera (16) is located on the vibratory portion (14).

**FIG. 1**

**FIG. 2A**

**FIG. 2B**

**FIG. 2C**

FIG. 3

Amplitude

## FIG. 4A

40

$d.tan\theta_{vib}$

## FIG. 4B

$d_x = r.sin\theta_{rot}.sin\theta_{rot}$

$d_y = r.sin\theta_{rot}.cos\theta_{rot}$

**FIG. 5**

# FIG. 6A

# FIG. 6B

**FIG. 7A**

**FIG. 7B**

600

```
                    ┌─────────────────────┐
                    │ Initialise Reconstruction│──610
                    │        Image          │
                    └─────────────────────┘
                              │
         ┌────────────────────┤
         │          ┌─────────────────────┐
         │          │  Map region of captured│──620
         │          │   image to position of │
         │          │   vibratory portion    │
         │          └─────────────────────┘
         │                    │
         │          ┌─────────────────────┐
         │          │ Calculate pixel shift for│──630
         │          │       the region      │
         │          └─────────────────────┘
         │                    │
    650 ─┤          ┌─────────────────────┐
         │          │   Shift pixel data    │──640
         │          │                       │
         └──────────└─────────────────────┘
```

# FIG. 8

FIG. 9

Europäisches
Patentamt

European
Patent Office

Office européen
des brevets

# EUROPEAN SEARCH REPORT

Application Number

EP 21 21 7451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 10 980 410 B1 (HU WENTAO [CN] ET AL) 20 April 2021 (2021-04-20) * column 3, line 61 – column 4, line 4; figures 2,3,8 * * column 8, line 18 – line 28 * * column 2, line 45 – line 65 * ----- | 1-16 | INV. H04N5/232 H04N5/225 |
| Y | US 2019/364210 A1 (JEFREMOV ANDREI [SE] ET AL) 28 November 2019 (2019-11-28) * paragraphs [0003], [0007], [0051], [0052], [0053], [0057]; figure 2 * ----- | 1-16 | |

TECHNICAL FIELDS
SEARCHED      (IPC)

H04N

The present search report has been drawn up for all claims

| Place of search | Date of completion of the search | Examiner |
|---|---|---|
| The Hague | 3 June 2022 | Wahba, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 21 7451

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2022

| Patent document cited in search report | | Publication date | Patent family member(s) | | Publication date |
|---|---|---|---|---|---|
| US 10980410 | B1 | 20-04-2021 | US 10980410 | B1 | 20-04-2021 |
| | | | WO 2021168658 | A1 | 02-09-2021 |
| US 2019364210 | A1 | 28-11-2019 | CN 103563349 | A | 05-02-2014 |
| | | | CN 106101566 | A | 09-11-2016 |
| | | | EP 2702760 | A2 | 05-03-2014 |
| | | | EP 3079351 | A1 | 12-10-2016 |
| | | | EP 3079352 | A1 | 12-10-2016 |
| | | | GB 2492529 | A | 09-01-2013 |
| | | | US 2012307086 | A1 | 06-12-2012 |
| | | | US 2014211028 | A1 | 31-07-2014 |
| | | | US 2019364210 | A1 | 28-11-2019 |
| | | | WO 2012164048 | A2 | 06-12-2012 |

EPO FORM P0459

For more details about this annex : see Official Journal of the European Patent Office, No. 12/82